# EUROPEAN PATENT SPECIFICATION

(11) **EP 4 384 112 B1**
(45) Date of publication and mention of the grant of the patent: **02.07.2025**
(21) Application number: 22782894.4
(22) Date of filing: 26.09.2022
(51) Int. Cl.: A61C 5/42, A61C 1/12, A61C 17/02, A61C 1/18

(54) **DENTAL HANDPIECE ATTACHMENT**
AUFSATZ FÜR DENTALES HANDSTÜCK
FIXATION D'INSTRUMENT DENTAIRE À MAIN

(30) Priority: 27.09.2021 EP 21199273
(43) Date of publication of application: 19.06.2024
(73) Proprietor: ReDent Nova GmbH & Co. KG, 13507 Berlin (DE)
(72) Inventor: SCHREIBER, Zeev, 14193 Berlin (DE)
(74) Representative: Arth, Hans-Lothar
(86) International application number: PCT/EP2022/076710
(87) International publication number: WO 2023/046962

(56) References cited:
- EP-A1- 3 851 068
- CN-A- 107 616 849
- FR-A1- 2 864 442

## Description

The present invention relates to a contra-angle dental handpiece attachment for a device for driving an endodontic file and for operating a remote pump.

### Background of the invention

During a root canal treatment of a tooth, an irrigation solution, such as sodium hypochlorite solution, is used in order to clean the root canal and the root canal is thereby shaped by rotational motion of a file.

In the US patent No. 10,327,866 B2, the control of a pump for delivering an irrigation solution is described. However, the pump and the device for the endodontic treatment are operated independently of each other, i.e. the pump and the device do not communicate by a signal transfer. Operating the two devices individually and independently has the issue that shaping by rotational motion of the endodontic file and cleaning of the root canal by the irrigation solution are asynchronous resulting in a rotational treatment of the root canal in a dry state of root canal, which causes injuries of the root canal. Moreover, the dentist has to control the endodontic device and the pump, which bears a high risk of an accident. Therefore, there is a need to operate a pump and the endodontic file synchronously.

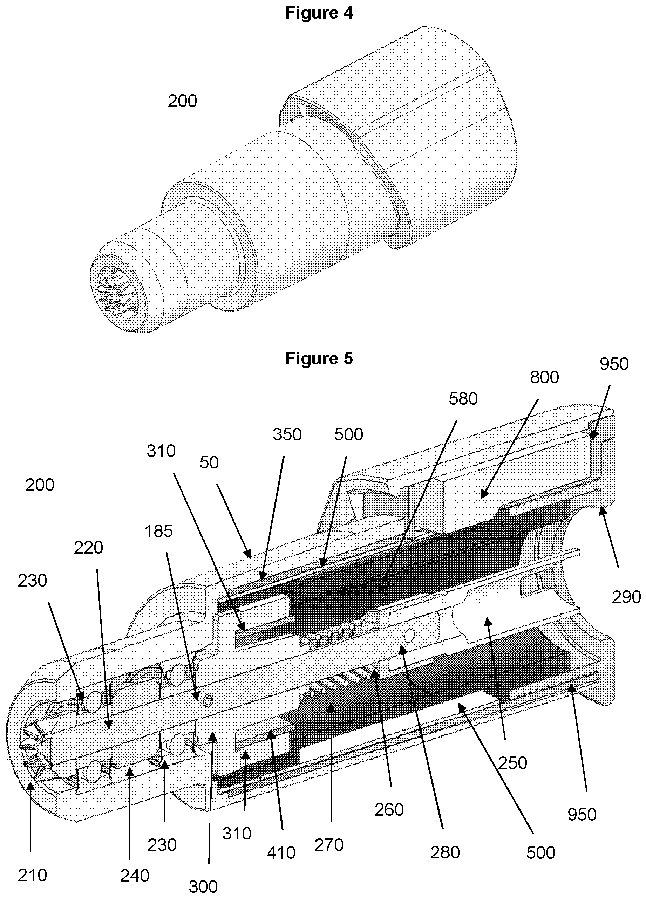

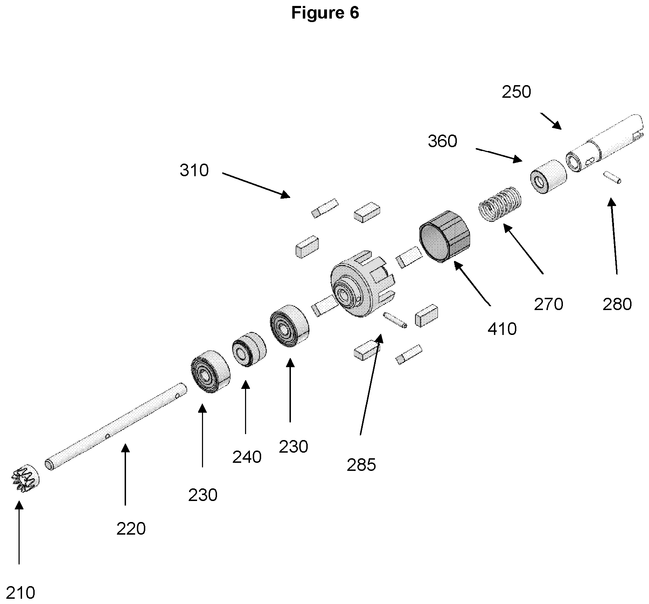

Synchronous operation of a pump and an endodontic file can be achieved with a device (200) for driving an endodontic file (1000), and simultaneously control the operation of a remote pump (700) for delivering of an irrigation solution during endodontic root canal treatment, which is described herein (see **Figures 4** to **6**). Said device can be integrated in a dental handpiece and comprises a gear shaft (220) for the connection with and driving the endodontic file (1000); the gear shaft is surrounded by at least one magnet (310) fixed in the rotatable magnet holding means (300) and a coil (510) printed on a PCB surrounding the rotatable magnet holding means (300); The gear shaft is driven by a motorized power handle (600) in such a way that the rotatable magnet holding means (300) rotates while the surrounding coil (510) remains in position. An AC voltage is induced in the coil printed on the PCB and analyzed by a CPU (520) on the PCB (500) for measuring the rotation speed. Depending on the measured speed, the device (200) operates a remote pump (700) wirelessly by sending signals via a transmitter (550) and an antenna (560).

However, existing dental handpieces are often not compatible with the said device for driving an endodontic file and simultaneously controlling the operation of a remote pump or even interfere with the signal transfer to the remote pump since the dental handpieces of the prior art have a metal housing or a constructed of metal components which may shield the radiation of the antenna.

Moreover, using an integrated device for driving an endodontic file and simultaneously controlling the operation of a remote pump requires assembling and disassembling of the dental handpiece before and after each endodontic treatment thereby dental material and other media may deposit on and within the dental handpiece. The dental material cannot be easily washed out of the dental handpiece, also due to the complex construction, so that the practitioner cannot be certain that the material has been completely removed.

In addition, the dental handpieces of the prior art often made of metal such as steal, which is prone to degradation when being exposed to the corrosive irrigation solution containing sodium hypochlorite during endodontic treatment of the root canal.

FR 2864442 A1 discloses a dental contra-angle handpiece for the attachment and for the rotational driving of a dental instrument about a drive axis and an assembly for the transmission of such movement. The handle and the head of the handpiece are electrically connected by an elastic and electrically conducting connecting device.

EP 3851068 A1 discloses a device for shaping and simultaneous flushing and suction of a tooth root canal comprising a flexible endodontic file and a head.

CN 107616849 A describes a device for root canal treatment comprising a root a root canal file driven and rotated by a root canal motor, wherein the root canal file is hollow, the upper end peripheral wall of the root canal file is provided with several through holes communicating with the hollow inner cavity, and the root canal motor is provided with a negative pressure suction tube communicated with the inner cavity.

Thus, there is a need for a dental handpiece which allows integration of a device for driving an endodontic file and simultaneously controlling the operation of a remote pump as described herein, wherein the dental handpiece can be used in a hygienic manner, does not interfere with the signal transfer of the integrated device to the remote pump, and is constructed in a robust manner so that the dental handpiece withstands the harsh conditions during endodontic treatment, including exposure to the corrosive irrigation solution and the impact of high forces required for transmission of rotational motion to the endodontic file.

It is the objective of the present invention to provide an improved dental handpiece attachment for a device for driving an endodontic file head and simultaneously controlling the operation of a remote pump for delivering of an irrigation solution during endodontic root canal treatment, wherein the dental handpiece attachment can be easily kept clean and sterile, does not interfere with the signal transfer of the integrated device and is easy to construct in a robust manner which allows the dental handpiece to withstand the harsh conditions during endodontic treatment. The objective of the present invention is solved by the teaching of the independent claims. Further advantageous features, aspects and details of the invention are evident from the dependent claims, the description, the figures, and the examples of the present application.

### Brief description of the invention

The objective of the present invention is solved by a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120),
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

The dental handpiece attachment (100) of the present invention consists of three parts: a handle portion (110), a shank portion (120) and a head portion (130), which are angularly joined with each other, i.e. contra-angled.

The inventors have found that it is particularly advantageous that the elongated housing (101) as well as the drive arrangement are made of radiolucent plastics. The attachment (100) made nearly completely of plastics does not interfere with the signal transfer from the device (200) to the remote pump, thereby allowing proper remote operation of the pump (700) while the device (200) is integrated in the handpiece attachment (100) in a clean and sterile manner. Thus, the handle portion (110) is configured to not interfere with electromagnetic components of the device (200), including a transmitter (550) and/or an antenna (560) and/or an rotatable magnetic holding means (300) of the device (200).

The handle portion (110) of the inventive attachment (101) described herein, is designed to enclose at least partially the device (200) and configured to form a detachable form-fit connection with the device (200). The handle portion is designed to receive the device (200) in a form-fit manner and holds it in a position during endodontic treatment so that the device can drive the endodontic file (1000) via the driving arrangement (150).

This form-fit connection of the contra-angle dental handpiece attachment (100) to the device (200) is essential, since the handpiece attachment (100) is manufactured for single use while the device (200) is designed for a plurality of uses. This form-fit connection is detachable in order to replace the handpiece attachment (100) intended for single use by an unused handpiece attachment (100), but is not movable and not slidable and not rotatable in relation to the device (200). Moreover, due to the fact that an irrigation solution such as sodium hypochlorite flows through the through-conduits (102,105) of the handpiece attachment (100) it is important that the form-fit connection is highly precise. The tolerance of the form-fit connection is preferably less than ±0.05 mm, more preferably less than ±0.04 mm, still more preferably less than ±0.03 mm, and most preferably less than ±0.02 mm.

Preferably, the handle portion is equipped on the inner wall with means for keeping the device in position, such as one or more protrusions or one or more projections. The attachment surrounds and encloses the device so that the device is isolated from contaminations such as dental material as well as corrosive irrigation solution, which could cause the device to stop working. Therefore, less effort is needed for cleaning and/or sterilizing the device (200).

In addition, the elongated housing (101) of the inventive attachment (100) is equipped with a through-conduit (102) for delivering an irrigation solution to a tooth root canal (10), and a through-conduit (105) for sucking an irrigation solution from a tooth root canal (10), wherein both through-conduits (102,105) are positioned so that the proximal ends (103, 106) extend beyond the end of the handle portion (110). This extension facilitates the fluid communication with the reservoir (750) and pump (700), respectively, but also ensures that no contamination of the device (200) occurs.

### Description of the invention

The term "contra-angle dental handpiece attachment" or "dental handpiece attachment" or "attachment" as used herein, refers to the part of the dental device containing at least an endodontic instrument, such as a file (1000) and a drive arrangement (150). Moreover, the dental handpiece attachment may also contain a tool holder.

The term "motorized power handle" as used herein, refers to a handle, to be held by the user while operating the dental tool from which motive power is supplied to move the endodontic instrument.

The term "remote pump" as used herein, refers to a pump which is remote of the device (200). The signal communication between the device (200) and the remote pump (700) is performed wireless.

The term "handle portion" as used herein, refers to the part of the elongated housing which receives the device (200) and which is held by the practitioner during the endodontic treatment.

The term "shank portion" as used herein, refers to the part of the elongated housing, which contains the drive arrangement (150) and which accepts the rotary motion from the device and which is angled joined to the handle portion.

The term "head portion" as used herein, refers to the part of the elongated housing that holds and drives the endodontic file (1000) and is joined to the shank portion.

The term "radiolucent" as used herein, refers to a material that transmits radio waves, i.e. electromagnetic irradiation that is typically produced by a transmitter with an antenna. Thus, radiolucent material material neither absorbs nor reflects radio waves, such as suitable polymers or plastics. Radiolucent materials used in the components of the inventive attachment do not have to transmit X-ray irradiation.

### Housing

The housing (101) of the inventive attachment (150) consists of three parts: a handle portion (110), a shank portion (120) and a head portion (130), which are angularly joined with each other, i.e. contra-angled.

The housing is preferably made of radiolucent plastics. Preferably, the housing is made of acrylonitrile butadiene styrene or polycarbonate. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120), wherein the housing is made of acrylonitrile butadiene styrene or polycarbonate;
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the elongated housing (101) is made of polycarbonate.

Each part of the housing has preferably a thickness of at least 2 mm in order to exhibit sufficient stability towards the mechanical forces acting on the housing due to the rotational motion of the device as well as the exposure to corrosive irrigation solution. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120), wherein the housing has a thickness of at least 2 mm;
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

### Handle portion

The handle portion of the inventive attachment (100) is generally hollow in order to receive the device for driving an endodontic file and for operating a remote pump.

The handle portion (110) has preferably a thickness of at least 2 mm in order to exhibit sufficient stability towards the mechanical forces acting on the housing due to the rotational motion of the device as well as the exposure to corrosive irrigation solution. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120),
wherein the walls of the handle portion have a thickness of at least 2 mm;
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the handle portion comprises means for positioning the device (200) within the attachment. Preferably, said means for positioning the device (200) is a protrusion or projection. The protrusion can be a solid protrusion, preferably a radial solid protrusion in relation to the longitudinal axis of the device or the handle portion. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120),
wherein the handle portion (110) of the housing (101) comprises a solid protrusion (111) on the inside as stop for positioning the device (200);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably. the contra-angle dental handpiece attachment (100) for a device (200) for driving an endodontic file (1000) and for operating a remote pump (700), comprises an elongated housing (101) made of radiolucent plastics, the elongated housing (101) comprises a generally hollow handle portion (110), a shank portion (120) being connected to the handle portion (110), and a head portion (130) being connected to the shank portion (120),
wherein the handle portion (110) of the housing (101) comprises a radial solid protrusion (111) on the inside as stop for positioning the device (200);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

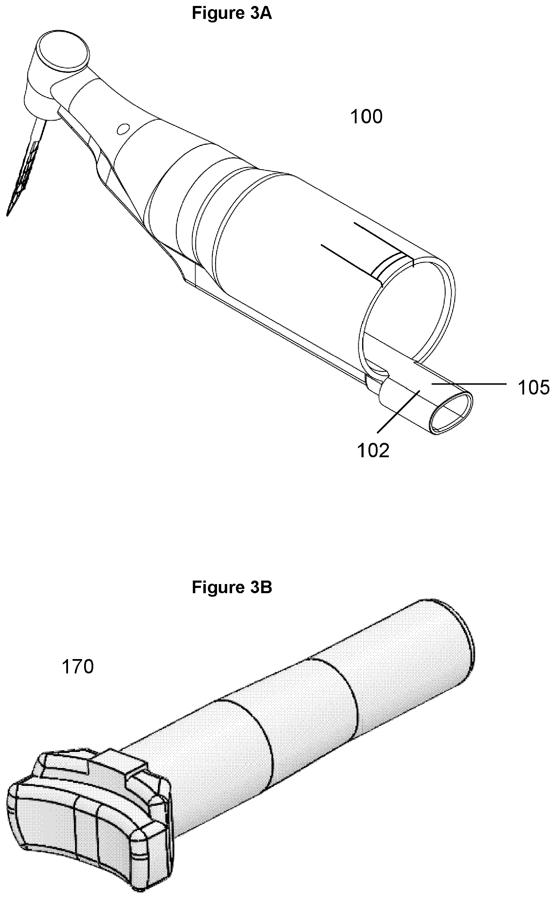

In a further preferred embodiment, a part of the handle portion (110) of the elongated housing (101) is designed as an elastic snap element (112) for forming a detachable non-rotatable form-fit connection with the device (200) (see **Figure 3**). The elastic snap element does not protrude beyond the end of the housing. The elastic snap element (112) engages in a part of the housing (201) of the device, thereby forming a detachable non-rotatable connection with the device (200). The connection can be easily released by pressing the snap element (112) down. This allows easy integration and disintegration of the device (200) in the dental device (1000) in a clean and hygienic manner so that contamination of mechanical parts with dental material can be avoided.

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120),
wherein a part of the handle portion (110) of the elongated housing (101) is designed as an elastic snap element (112) for forming a detachable non-rotatable form-fit connection with the device (200);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the snap element (112) is located opposite to the proximal end of the through-conduit (102) for delivering an irrigation solution to a tooth root canal (10) and opposite to the proximal end of the through-conduit (103) for sucking an irrigation solution from a tooth root canal (10). This ensures a more stable connection between the attachment and device and better positioning of the device during the endodontic treatment.

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120),
wherein a part of the handle portion (110) of the elongated housing (101) is designed as an elastic snap element (112) for forming a detachable non-rotatable form-fit connection with the device (200) and the snap element (112) is located opposite to the proximal end of the through-conduit (102) for delivering an irrigation solution to a tooth root canal (10) and opposite to the proximal end of the through-conduit (103) for sucking an irrigation solution from a tooth root canal (10); wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

### Shank portion

The shank portion (120) of the housing (101) is angularly joined to the handle portion (110). Preferably, the angle between the longitudinal axis of the shank portion and the longitudinal axis of the handle portion lies between 160° and 170°. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed; and
wherein the angle between the longitudinal axis of the shank portion and the longitudinal axis of the handle portion lies between 160° and 170°.

More preferably, the angle between the longitudinal axis of the shank portion and the longitudinal axis of the handle portion is about 165 degrees, 166 degrees, 167 degrees, or 168 degrees. Most preferably, the angle between the longitudinal axis of the shank portion and the longitudinal axis of the handle portion is 167 degrees.

The inventors have found that a thickness of the walls of the shank portion larger than the thickness of the walls of the handle portion is advantageous, since a larger thickness allows the construction of ergonomic dental handpiece attachments with sufficient stability towards the mechanical forces acting on the housing due to the rotational motion of the device as well as the exposure to corrosive irrigation solution.

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein the wall of the shank portion (120) has a thickness of at least 4 mm;
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein the wall of the shank portion (120) has a thickness of at least 4 mm and the wall of the handle portion (110) has a thickness of at least 2 mm;
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

In a preferred embodiment, the thickness of the wall of the shank portion increases towards the head portion (130).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein the thickness of the wall of the shank portion (120) increases towards the head portion (130);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Particularly preferred is, when a part (121) of the inner wall of shank portion is tapered towards the handle portion. This ensures optimal fixation of the driving arrangement (150) within the shank portion.

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a part (121) of the inner wall of shank portion (120) is tapered towards the handle portion (110);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

In a preferred embodiment of the present invention, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein the thickness of the wall of the shank portion (120) increases towards the center of the shank portion (120);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

### Drive arrangement

The drive arrangement (150) of the inventive arrangement (100) comprises a file shaft (160) for driving the endodontic file (1000), an eccentric shaft (170) being coupled to the file shaft (160) and a crown gear shaft (180) being coupled to the eccentric shaft (170). The crown gear shaft (180) is equipped at the end with a crown gear (181).

A **crown gear** (also known as a face gear or a contrate gear) is a gear, which has teeth that project at right angles to the face of the wheel. In particular, a crown gear is a type of bevel gear where the pitch cone angle is 90 degrees.

The crown gear is made of plastics like the other components of the drive arrangement. Preferably, the crown gear comprises between 8 to 12 teeth and most preferably 10 teeth. Preferably, the teeth of the crown gear are straight.

The crown gear (181) is positioned within the attachment to rotatably couple to the gear (210) for driving the endodontic file (1000) of the device (200), when the device is attached to the attachment. Thus, the gear (210) drives the crown gear (181) and in turn, the crown gear shaft (180) drives the eccentric shaft (170), which in turn drives the file shaft (170) which finally rotates the endodontic file (1000). The file shaft (170) is positioned along the longitudinal axis of the head portion (130) and may induce a simple rotational motion or a reciprocating repetitive back-and-forth linear motion or a combination of both (rotational and vibration movement.)

All components of the drive arrangement (150), including the file shaft (160), the eccentric shaft (170), the crown gear shaft (180) and the crown gear (181) are made of plastics in order to not interfere with the radio wave signal transfer of the device (200) to the remote pump (700).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the file shaft (160), the eccentric shaft (170), the crown gear shaft (180) and the crown gear (181) are made of plastics;
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the driving arrangement (200) and all of its components are made of polyoxymethylene acetal copolymer (POM-C) or polyetheretherketone (PEEK).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of polyoxymethylene acetal copolymer or polyetheretherketone (PEEK) is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the crown gear shaft (180) including the crown gear (181) and the file shaft (160) for driving the endodontic file (1000) are made of polyetheretherketone and the eccentric shaft (170) is made of polyoxymethylene acetal copolymer.

The drive arrangement may comprise one or more additional bearing(s) for supporting the rotational motion of the shafts. Said one or more additional bearing(s) are preferably made of plastics.

In a preferred embodiment the crown gear (181) of the crown gear shaft (180) is configured to rotatably couple in a shaft angle between 160° and 170° to the gear (210) for driving the endodontic file (1000). A shaft angle is the angle that occurs between the longitudinal axis of the crown gear shaft (180) and the longitudinal axis of the gear shaft (220) for rotating the gear (210) and for rotating at least one magnet (310).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200) in a shaft angle between 160° and 170°; wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the shaft angle is about 165 degrees.

In one embodiment of the inventive attachment (100), the angle between the longitudinal axis of the file shaft (160) for driving the endodontic file (1000) and the longitudinal axis of the crown gear shaft (180) comprises 90 degrees.

In one embodiment of the inventive attachment (100), the drive arrangement (150) is fixed within the shank portion (120) in a sealed manner. The drive arrangement fills the inner volume of the shank portion so that no gaps between the drive arrangement and the inner wall of the shank portion occur. The drive arrangement is therefore fixed in the shank portion optimally for transferring the rotational motion from the device (200) to the endodontic file (1000).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) in a sealed manner, the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) in a sealed manner without gaps, the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

In a preferred embodiment, the drive arrangement (150) forms a smooth surface, without any grooves, structures, recesses or gaps, towards the handle portion where only the crown gear of the crown gear shaft protrudes. A clean inner surface is beneficial since it facilitates cleaning and (pre-)sterilization of the attachment (100) and thereby reduces the risk of contamination of the mechanic parts of the attachment with the corrosive irrigation solution.

In one embodiment of the inventive attachment (100), the drive arrangement (150) is tapered towards the head portion, such that the drive arrangement (150) is narrower around the eccentric shaft (170) than around the crown gear shaft (180). Such a truncated cone shape allows better form-fit fixation and positioning of the drive arrangement (150) within the shank portion.

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics has a truncated cone shape and is fixed in the shank portion (120) in a form-fit manner, the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

In a further embodiment of the inventive attachment (100), the drive arrangement (150) further comprises a radial fastening projection (151) which improves fixation to and positioning of the drive arrangement within the shank portion (120).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) by a radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

In one embodiment, the radial fastening projection (151) is positioned around the crown gear shaft (180). In one embodiment, the radial fastening projection (151) has a height of 0.9 mm to 1.1 mm.

In a further embodiment, the drive arrangement comprises an elastic ring positioned adjacent to the radial fastening projection (151) for positioning and fixing the drive arrangement in the shank portion.

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) by a radial fastening projection (151) and an elastic ring having an elastically enlarged diameter, wherein the elastic ring is positioned adjacent to the radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) by a radial fastening projection (151) and an elastic ring having an elastically enlarged diameter, wherein the elastic ring is positioned adjacent to the radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed at a part of the inner wall (121) of the shank portion (120) that is tapered towards the handle portion (110) by a radial fastening projection (151) and an elastic ring having an elastically enlarged diameter, wherein the elastic ring is positioned adjacent to the radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

The elastic ring can be of any shape, such as an O-ring or a V-ring. Preferably, the ring is an elastic V-ring (152).

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) by a radial fastening projection (151) and an elastic V-ring (152) having an elastically enlarged diameter, wherein the elastic V-ring (152) is positioned adjacent to the radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed in the shank portion (120) by a radial fastening projection (151) and an elastic V-ring (152) having an elastically enlarged diameter, wherein the elastic V-ring (152) is positioned adjacent to the radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

Preferably, the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is fixed at a part of the inner wall (121) of the shank portion (120) that is tapered towards the handle portion (110) by a radial fastening projection (151) and an elastic V-ring (152) having an elastically enlarged diameter, wherein the elastic V-ring (152) is positioned adjacent to the radial fastening projection (151), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

The V-ring is therefore composed of an elastic material, preferably a polymer. Preferably, the polymer is resistant of aqueous acids, aqueous bases and/or alcohols. More preferably, the polymer is resistant to aqueous acids namely hydrochloric acid and phosphoric acids. The polymer can be a thermosetting polymer (thermoset) or thermosoftening plastic (thermoplastic). Preferably, the polymer is an organic polymer. The polymer can be selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, styrene-butadiene-styrene, epoxy resin, and phenol formaldehyde resins (phenolic resins). Preferably, the polymer is selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, and styrene-butadiene-styrene. More preferably, the polymer is selected from the group comprising or consisting of acrylonitrile butadiene styrene copolymer (ABS), acrylonitrile styrene (ANS), polyphthalamide, poly(ethene-co-tetrafluoroethene), polycarbonate, polyethylene, polyimide, polystyrene, and polyvinyl chloride. Still more preferably, the polymer is selected from the group comprising or consisting of acrylonitrile butadiene styrene copolymer (ABS), acrylonitrile styrene (ANS), polyphthalamide, and polycarbonate. The polymer is most preferably acrylonitrile butadiene styrene copolymer (ABS).

Most preferably, the V-ring (152) is made of FKM Viton^{®}, a cross-linked copolymer of vinylidene fluoride (VDF) and hexafluoropropylene (HFP) having a fluorine content of approximately 66 weight percent.

In a further embodiment of the inventive attachment (100), the drive arrangement (150) comprises a clutch mechanism which disables a reciprocating movement of the endodontic file (1000) when the movement of the endodontic file (1000) is restricted, e.g. by contact with the tooth root canal wall or tooth root end (see **Figure 3B****).**

Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed; and
wherein the drive arrangement (150) comprises a clutch mechanism which disables the reciprocating movement of the endodontic file (1000) when the movement of the endodontic file (1000) is restricted.

### Through-conduits

The contra-angle dental handpiece attachment (100) according to the invention comprises a through-conduit (102) for delivering an irrigation solution to a tooth root canal (10) and a through-conduit (105) for sucking an irrigation solution from a tooth root canal (10). Both through-conduits form a part of the elongated housing (101) and run from the head portion (distal end) to the handle portion (proximal part). The through-conduits (102,105) are integrated in the housing (101) in order to not disturb the practitioner during work. The proximal ends extend beyond the handle portion in order to facilitate establishing fluid communications with the reservoir and the remote pump without affecting the integration and operation of the device (200).

In a preferred embodiment, the through-conduit (102) for delivering an irrigation solution to a tooth root canal (10) and the through-conduit (105) for sucking an irrigation solution from a tooth root canal (10) are arranged parallel and adjacent to each other. The parallel and adjacent arrangement is particularly space saving and allows the walls of the through-conduits (102,105) to have a sufficient thickness of at least 2 mm, while maintaining an ergonomic shape of the housing. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed; and
wherein the through-conduit (102) for delivering an irrigation solution to a tooth root canal (10) and the through-conduit (105) for sucking an irrigation solution from a tooth root canal (10) are arranged parallel and adjacent to each other.

In a preferred embodiment, the proximal ends (103,106) are located adjacent to each other in a port (108) for establishing fluid communication with a remote pump and a reservoir. Said port (108) forms a jack of the elongated housing (101) and facilitates establishing a fluid communication with a remote pump and a reservoir. Thus, an embodiment of the present invention is related to a contra-angle dental handpiece attachment (100) for a device (200) for driving an endodontic file (1000) and for operating a remote pump (700), wherein the contra-angle dental handpiece attachment (100) comprises an elongated housing (101) made of radiolucent plastics, the elongated housing (101) comprises a generally hollow handle portion (110), a shank portion (120) being connected to the handle portion (110), and a head portion (130) being connected to the shank portion (120);
wherein the handle portion (110) is designed to enclose at least partially the device (200) and configured to form a detachable form-fit connection with the device (200);
wherein the handle portion (110) is configured to not interfere with electromagnetic components of the device (200), including a transmitter (550) and/or an antenna (560) and/or an rotatable magnetic holding means (300) of the device (200);
wherein a drive arrangement (150) made of plastics is mounted the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200)
wherein the head portion (130) comprises a tool holder (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed; and
wherein the proximal ends (103,106) are located adjacent to each other in a port (108) for establishing fluid communication with a remote pump and a reservoir.

### Device (200) for driving an endodontic file (1000) and for operating a remote pump (700)

Also herein is described a device (200) for driving an endodontic file (1000) and for operating a remote pump (700). Said device can be integrated in the contra-angle dental handpiece attachment (100) according to the invention to drive an endodontic file (1000) and to operate a remote pump (700).

The device (200) comprises
- a gear (210) for the connection with the attachment (100);
- a drive shaft (220) for rotating the gear (200) and for rotating at least one magnet (310);
- a first cylindrical element (410) surrounding the drive shaft (220);
   a rotatable magnet holding means (300) surrounding the first cylindrical element (410);
- at least one magnet (310) fixed in the rotatable magnet holding means (300);
- a coil (510) surrounding the rotatable magnet holding means (300);
- a second cylindrical element (450) surrounding the coil (510);
- a central processing unit (520);
- an inner encoder (530) on the central processing unit (520) for measuring the velocity of the drive shaft (220);
- a transmitter (550);
- an antenna (560) for sending a signal to a remote pump (700); and
- at least one sleeve (250) interlinked with the drive shaft (220) for moving the drive shaft (220) by a motorized power handle (600).

Thus, the device (200) can be driven by a motorized power handle (600), such as an E-type motor.

Preferably, the gear (210) is designed as a bevel gear, and more preferably it is a steel bevel gear.

The gear can be made of any material. Preferably, the gear is made of iron or iron alloy. Preferably, the iron alloy contains martensite as a grain structure. It is preferred if the gear is made of a ferromagnetic material. The gear (210) is preferably made of an AISI/SAE 440C annealed QQ-S-763 Class 440C condition A.

The drive shaft (220) can be composed of any material. The material is preferably not ferromagnetic. Preferably, the drive shaft (220) is composed of iron or iron alloy, more preferably iron alloy. The iron alloy can be steel, and more preferably stainless steel. It is preferred if the iron or iron alloy is not ferromagnetic. The steel is thus preferably an austenite, and more preferably stainless steel austenite. The steel can be a chromium-nickel steel, preferably AISI 316 (SAE 316). Still more preferably, the steel is AISI 316. Most preferably, the drive shaft (220) is made of an AISI 316 annealed stainless steel bar.

The drive shaft (220) can contain at least one bearing (230) for the improvement of the rotational motion. The bearing (230) can be composed of any material.

The material is preferably not ferromagnetic. Preferably, the bearing (230) is composed of iron or iron alloy, more preferably iron alloy. The iron alloy can be steel, and more preferably stainless steel. It is preferred if the iron or iron alloy is not ferromagnetic. The steel is thus preferably an austenite, and more preferably austenitic stainless steel. The steel can be a chromium-nickel steel, preferably AISI 316 (SAE 316). Still more preferably, the steel is AISI 316. Most preferably, the bearing (230) is made of an AISI 316 annealed stainless steel bar.

The at least one bearing (230) is preferably positioned between the gear (210) and the magnet holding means (300).

In case of at least two bearings (230), the bearings are preferably spatial separated by a bearing spacer (240).

The bearing spacer (240) can be made of any material. Preferably, the bearing spacer is made of a polymer. Preferably, the polymer is resistant of aqueous acids, aqueous bases and/or alcohols. More preferably, the polymer is resistant to aqueous acids namely hydrochloric acid and phosphoric acids. The polymer can be a thermosetting polymer (thermoset) or thermosoftening plastic (thermoplastic). Preferably, the polymer is an organic polymer. The polymer can be selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaeinimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, styrene-butadiene-styrene, epoxy resin, and phenol formaldehyde resins (phenolic resins). Preferably, the polymer is selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, and styrene-butadiene-styrene. More preferably, the polymer is selected from the group comprising or consisting of acrylonitrile butadiene styrene copolymer (ABS), acrylonitrile styrene (ANS), polyphthalamide, poly(ethene-co-tetrafluoroethene), polycarbonate, polyethylene, polyimide, polystyrene, and polyvinyl chloride. Still more preferably, the polymer is selected from the group comprising or consisting of acrylonitrile butadiene styrene copolymer (ABS), acrylonitrile styrene (ANS), polyphthalamide, and polycarbonate. The polymer is most preferably acrylonitrile butadiene styrene copolymer (ABS).

The generation of a voltage being high enough to operate the transmitter within a device as small as the device (200) is challenging. The space in such a device is limited which restricts the dimensions of the voltage generating parts, such as the thickness of the coil elements and the number of magnets.. It is particularly difficult to provide a voltage of 1.7 V in the dimension of the endodontic device (1).

By the first and second cylindrical element (410) and (450) the magnetic flux is controlled and concentrated on the coil (510), in particular on the wires of the coil (510) that cross said flux, i.e. the magnetic flux does not spread over the whole device (200), and is restricted to the area of the coil (510) so that the efficiency of the electrical current generation increases (efficient energy generation). In particular, ferromagnetic material such as iron or iron alloy is suitable to increase said effect.

The amount of the carbon in the iron alloy of the first cylindrical element (410) can be up to 0.2 wt%, preferably 0.15 wt%, and most preferably up to 0.1 wt%. In other words, the amount of the carbon in the iron alloy of the first cylindrical element (410) is lower than 0.2 wt% carbon, more preferably lower than 0.15 wt% carbon, still more preferably lower than 0.1 wt% carbon.

The amount of the carbon in the iron alloy of the second cylindrical element (450) can be up to 0.2 wt%, preferably 0.15 wt%, and most preferably up to 0.1 wt%. In other words, the amount of the carbon in the iron alloy of the second cylindrical element (450) is lower than 0.2 wt% carbon, more preferably lower than 0.15 wt% carbon, still more preferably lower than 0.1 wt% carbon.

For example, the steel AISI 1008 can be used as a material for the first cylindrical element (310) and/or second cylindrical element (350).

In one embodiment of the device (200), the magnet holding means (300) is a magnetic separator (305).

The device (200) may contain 1, 2, 3, 4, 5, 6, 7, 8, 9, 10, 11, 12, 13, 14, 15, or 16 magnets. Preferably, the device contains 2, 4, 6, 8, 10, 12, 14, or 16 magnets. More preferably, the device contains 4, 6, 8, 10, or 12 magnets. Still more preferably, the device contains 6, 8, or 10 magnets. More preferably, the device contains at least 2 magnets, still more preferably 4 magnets, still more preferably 6 magnets, and still more preferably 8 magnets. Most preferably, the device (200) contains 8 magnets.

The at least one magnet (310) can be made of a neodymium-iron-boron alloy or a nickel-plated neodymium-iron-boron alloy.

The magnets (310) can be symmetrically arranged along the circumference of drive shaft (220), which provides strong magnetic flux loops. "Symmetrically arranged" means that the magnets are equidistantly positioned in the magnet holding means (300). Moreover, neighbouring (adjacent) magnets can have opposite polarity, which also provides strong magnetic flux loops. More advantageously, the magnets (310) are arranged symmetrically along the circumference of the drive shaft (220), and the neighbouring magnets have opposite polarity, which further increases the magnetic flux loops.

The magnet holding means (300), particularly the magnetic separator (305), can be made of any material, which is not ferromagnetic, paramagnetic or diamagnetic. The material is preferably a polymer. Preferably, the polymer is resistant of aqueous acids, aqueous bases and/or alcohols. More preferably, the polymer is resistant to aqueous acids namely hydrochloric acid and phosphoric acids. The polymer can be a thermosetting polymer (thermoset) or thermosoftening plastic (thermoplastic). Preferably, the polymer is an organic polymer. The polymer can be selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaeinimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, styrene-butadiene-styrene, epoxy resin, and phenol formaldehyde resins (phenolic resins). Preferably, the polymer is selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, and styrene-butadiene-styrene. More preferably, the polymer is selected from the group comprising or consisting of acrylonitrile butadiene styrene copolymer (ABS), acrylonitrile styrene (ANS), polyphthalamide, poly(ethene-co-tetrafluoroethene), polycarbonate, polyethylene, polyimide, polystyrene, and polyvinyl chloride. Still more preferably, the polymer is selected from the group comprising or consisting of acrylonitrile butadiene styrene copolymer (ABS), acrylonitrile styrene (ANS), polyphthalamide, and polycarbonate. The polymer is most preferably acrylonitrile butadiene styrene copolymer (ABS).

The inner encoder (530) on the central processing (520) unit for measuring the velocity of the drive shaft is implemented by means of the central processing unit (520) counting the time that passes between threshold crossing of the sine wave being generated in the coil (510), which is proportional to the velocity of the drive shaft (220). More precisely, the time that passes between threshold crossing of the sine wave being generated in the coil is proportional to the rotational speed of the drive shaft.

The AC voltage that is generated by the coil (alternating polarity sine wave at a frequency proportional to the rotation speed) goes into the central processing unit (420) preferably via a protection circuit to avoid reaching central processing unit input limitations. Said input is used to measure the rotation speed. The AC voltage is rectified preferably by means of diodes and capacitors in order to feed the DC-DC circuit. The rotation speed is thus measured by using the AC voltage of the coil, while the power supply circuits use the rectified DC voltage.

In one embodiment of the device (200), the coil (510), the central processing unit (520), the inner encoder (530), the transmitter (550), and the antenna (560) are on a printed circuit board (500). In order to reduce the size of a dental device (1100) or of the device (200), the integration of the coil into the printed circuit board (500) is essential since no space for regular coils is present in a dental device (1100) or of the device (200) having a reduced volume is available. In addition, coils are easier to manufacture when being printed on a printed circuit board in comparison to conventional thin wire winding technology. Moreover, assembly of the dental device (1100) and integration of the device 200 into the attachment (100) according to the invention is facilitated by using the PCB (500) having the coil (510) printed on it, instead of a coil custom made by wire winding. In addition, a coil custom made by wire winding is less reliable than a coil (510) printed in multiple layers on a printed circuit board (500).

Thus, the coil can be printed on the printed circuit board (500).

An AC voltage is induced in the coil printed on the printed circuit board (500) by rotation of the at least one magnet in the rotatable magnet holding means (300). To this extent, adjacent magnets of the at least one magnet (310) fixed in the rotatable magnet holding means (300) are of opposite polarity, thereby generating alternating current. The coil therefore acts as an inductor on the PCB. Thus, the coil is preferably made of an electrically conductive material, such as copper. The cross section of the coil has preferably the shape of a rectangle.

The number of coils can be in the range of 3 to 10, preferably in the range of 4 to 8, and most preferably in the range of 4 to 6. A lower number of coils as stated above adversely affects the performance since not enough power is generated for activating the current electronics. A larger number of coils as stated above is more costly to produce and a flexible PCB with such a number of coils is difficult to place into the inventive device. Preferably, the printed circuit board (500) comprises six coils. Preferably, the coils are printed on top of each other so that they are located exactly at the same position on the printed circuit board. Preferably, the printed circuit board (500) comprises six coils, which are printed on top of each other.

The coils are printed as several layers on the printed circuit board. Preferably, each coil is printed as an individual layer on the PCB (500). The number of layers can be in the range of 3 to 10, preferably in the range of 4 to 8, and most preferably in the range of 4 to 6. Preferably, the printed circuit board (500) comprises six layers.

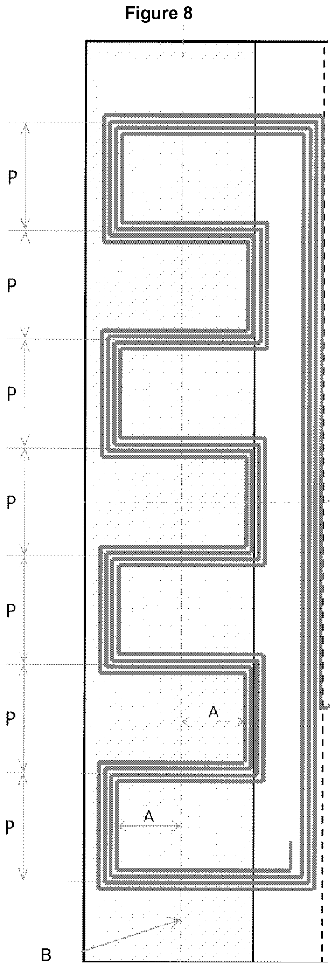

The printed coil can be of any pattern, such as wavy line pattern, S-shape pattern, snake shape pattern, rectangular snake shape pattern, or square wave pattern. Since the voltage induction is most efficient in sections of the coil, which are oriented parallel to the axis of rotation of the drive shaft (220) and the rotatable magnet holding means (300), those patterns are preferred that result in the largest sections of the coil, which are oriented in parallel to the axis of rotation. The coil can comprise a square wave pattern as depicted in **Figure** 8. Preferably, the coil is not spiral shaped.

In a particular embodiment, the coil (510) is square wave shaped, wherein the shape is defined by the parameters A, B and C (see **Figure 8**). A represents closest distance between the center line B and the square wave pattern and P represents the length of each segment of the square wave pattern. Preferably, P lies in the range of 3 mm to 7 mm, more preferably in the range of 4 mm to 6.5 mm and most preferably in the range of 5 mm to 6 mm. In a preferred embodiment, P is about 5.55 mm. Preferably, A lies in the range of 2 mm to 6 mm, more preferably in the range of 2.5 mm to 5 mm and most preferably in the range of 3 mm to 4 mm. In a preferred embodiment, A is about 3 mm.

In a particularly preferred embodiment, A is about 3 mm and P is about 5.55 mm.

Preferably, the square wave shaped coil consists of 7 to 15 periods (windings), more preferably of 8 to 14 periods, more preferably of 9 to 13 periods, and most preferably of 10 to 12 periods. Particularly preferred is a square wave shaped coil of 11 periods. In one embodiment, the number of the periods of the square wave shaped coil is identical to the number of the at least one magnet (310) fixed in the rotatable magnet holding means (300).

As mentioned above, for a more efficient voltage induction in the coil, a larger value of A is preferred. Also, for a more efficient voltage induction in the coil, a value of P is preferred which is identical or nearly identical to the distance of the adjacent magnets of the at least one magnet (310) fixed in the rotatable magnet holding means (300).

The effective length of each printed coil can be in the range of 1000 mm to 1800 mm, preferably in the range of 1200 mm to 1600 mm, more preferably 1300 mm to 1500 mm. Preferably, the effective length of each printed coil is about 1420 mm.

The device (200) may further contain a DC-DC converter (570). The DC-DC converter (570) may contain a maximum power point tracking algorithm. Thereby, the voltage level can be further improved.

The concept called "Maximum Power Point Tracking" (MPPT) is commonly known by a skilled person in the art. The concept is: to efficiently harvest energy from the coil, the device should neither seek for high current, nor high voltage, but rather seek for maximum power, which is the product of the current multiplied by the voltage. The DC-DC converter (570), which is fed by the coil energy, sweeps through certain ranges of current drawn from the coil, causing changes in the coil voltage. (In case of a low current, a light load exists and the voltage is higher. In case of a high current, a heavy load exists, and the voltage is lower). The power (product of current and voltage) is calculated along this sweep, the maximum power is recorded, and the DC-DC converter goes back to consume the current that corresponds to the maximum power point. During the device operation, the DC-DC converter keeps tracking this maximum power point, by actively changing the current consumed from the source (coil) and monitoring the voltage.

Thus, the DC-DC converter (570) may comprise a MPPT charge controller.

The central processing unit (520), the inner encoder (530), the transmitter (550), and the antenna (560) can be surrounded by an outer ring positioner (950). This outer ring positioner (950) will cover and protect said components. In case the coil (510), central processing unit (520), the inner encoder (530), the transmitter (550), and the antenna (560) are on one printed circuit board (500), the outer ring positioner (950) surrounds part of the PCB apart from the coil part. The outer ring positioner can be made of any material. Preferably, the material is a polymer. Preferably, the polymer is resistant of aqueous acids, aqueous bases and/or alcohols. More preferably, the polymer is resistant to aqueous acids namely hydrochloric acid and phosphoric acids. The polymer can be a thermosetting polymer (thermoset) or thermosoftening plastic (thermoplastic). Preferably, the polymer is an organic polymer. The polymer can be selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, styrene-butadiene-styrene, epoxy resin, and phenol formaldehyde resins (phenolic resins). Preferably, the polymer is selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, and styrene-butadiene-styrene. More preferably, the polymer is selected from the group comprising or consisting of acrylonitrile butadiene styrene copolymer (ABS), acrylonitrile styrene (ANS), polyphthalamide, poly(ethene-co-tetrafluoroethene), polycarbonate, polyethylene, polyimide, polystyrene, and polyvinyl chloride. Still more preferably, the polymer is selected from the group comprising or consisting of acrylonitrile butadiene styrene copolymer (ABS), acrylonitrile styrene (ANS), polyphthalamide, and polycarbonate. The polymer is most preferably acrylonitrile butadiene styrene copolymer (ABS).

The device (200) may additionally comprise at least one battery (800). The battery can help to reduce the waiting period before using the device (200) by 1.0 to 1.5 milliseconds, which is significant for surgeon. The battery may be replaceable and not fixed on the PCB. If a battery is used, the printed circuit board (500) may contain a battery connection (850).

As mentioned above, the space in a dental device is limited in a manner that the generation of a high voltage relative to the dimension is challenging. In order to charge a battery, a voltage of 4.2 V is necessary. Thus, it is particularly difficult to provide a voltage of 4.2 V in the dimension of the endodontic device (1). Reducing the waiting period before using the device (200) by 1.0 to 1.5 milliseconds by faster charging a battery is significant for a surgeon.

The battery can also be a rechargeable battery (810). Thus, the energy generated by the use of device (200) can be used for another treatment in order to reduce the waiting period before using the device (200) by 1.0 to 1.5 milliseconds, which is significant for a surgeon.

The rechargeable battery can be a lithium-ion polymer battery also called lithium polymer battery, which utilizes a polymer electrolyte. High conductivity semisolid gels or polymers form this electrolyte. These batteries provide higher specific energy than other lithium battery types. The weight of the device (200) can be reduced by using a lithium-ion polymer battery. The voltage of the lithium-ion polymer battery is preferably between 2.7 V to 3.7 V in a discharged state, more preferably 3.0 to 3.7V, still more preferably 3.5 V to 3.7 V, and still more preferably 3.7 V. The battery has preferably a capacity of 9 mAh.

In case of the presence of a rechargeable battery (810), the device (200) further comprises at least one battery charger (900). Optimally, a DC-DC converter (570) can be used to charge the battery, and thus function as a battery charger (900). The DC-DC converter (570) comprises then two outputs, one for the battery and one output for the transmitter. Power can be provided to the transmitter from one of the available power sources: either the coil or the battery, with the coil having precedence over the battery. Most preferably, the DC-DC converter (570) is adapted in such a way that if the coil has enough power for both, it will be the power source for battery charging and the transmitter, otherwise, the battery will power the transmitter.

The use of the battery voltage does not influence the measuring of the rotation speed since the AC voltage is used for this purpose while the battery produces a DC voltage.

The printed circuit board (500) may contain a capacitor connection (880) if a capacitor (860) is used. The one or more capacitors serve as power storage (power capacitor), like the battery (800), and can help to reduce the waiting period before using the device (200) by 1.0 millisecond to 1.5 milliseconds, which is significant for surgeon. Thus, in the device (200), the battery (800) may be replaced by one or more capacitors (860).

The at least one capacitor (860) is preferably selected from, but not limited to: ceramic capacitors constructed of two or more alternating layers of ceramic and a metal layer acting as the electrodes, multilayer ceramic capacitors (MLCCs), or Tantalum polymer capacitors. Given the limited available space of device (200), a capacitor of high volumetric efficiency is particularly preferred. Volumetric efficiency quantifies the performance of energy stored per unit volume and is calculated by multiplying the capacitance (C) by the maximum voltage rating (V), divided by the volume.

As mentioned above, the space in a dental device is limited in a manner that the generation of a high voltage relative to the dimension is challenging. In order to charge the capacitor, a voltage of 4.2 V is necessary. Thus, it is particularly difficult to provide a voltage of 4.2 V in the dimension of the dental device (1100). Reducing the waiting period before using the device (200) by 1.0 to 1.5 milliseconds by faster charging a battery is significant for a surgeon.

Thus, the energy generated by the use of device (200) can be used for another treatment in order to reduce the waiting period before using the device (200) by 1.0 millisecond to 1.5 milliseconds, which is significant for surgeon. Therefore, it is advantageous if the capacitor (860) has a capacitance of at least 400 µF.

Preferably, the at least one capacitor (860) has a capacitance in the range of 400 µF to 550 µF, more preferably in the range of 410 µF to 540 µF, more preferably in the range of 420 µF to 530 µF, more preferably in the range of 430 µF to 520 µF and most preferably in the range of 450 µF to 050 µF.

The device (200) can comprise 2, 3, 4 or 5 capacitors (860), wherein the capacitor(s) can be located on the printed circuit board (500) at the outer ring (950). The printed circuit board (500) may contain a capacitor charger (870) if one or more capacitor(s) are used.

Preferably, a DC-DC converter (570) can charge the capacitor, and thus function as a capacitor charger (870). The DC-DC converter (570) comprises then two outputs, one for the capacitor and one output for the transmitter. Power can be provided to the transmitter from one of the available power sources: either the coil or the capacitor, with the coil having precedence over the capacitor. Most preferably, the DC-DC converter (570) is adapted in such a way that if the coil has enough power for both, it will be the power source for capacitor charging and the transmitter, otherwise, the capacitor will power the transmitter.

The use of the capacitor voltage does not influence the measuring of the rotation speed since the AC voltage is used for this purpose while the capacitor produces a DC voltage.

The sleeve (250) for moving the drive shaft (220) by a motorized power handle (600) can be an ISO-type connector typical in the endodontic field. The connector can be composed of any material. The material is preferably not ferromagnetic. Preferably, the sleeve (250) is composed of iron or iron alloy, more preferably iron alloy. The iron alloy can be steel, and more preferably stainless steel. It is preferred if the iron or iron alloy is not ferromagnetic. The steel is thus preferably an austenite, and more preferably stainless steel austenite. The austenite can be AISI 316 (SAE 316). Still more preferably, the steel is AISI 316. Most preferably, the sleeve (250) is made of an AISI 316 annealed stainless steel bar.

The sleeve (250) can further be connected to a securing cup (260), wherein the securing cup (260) directly surrounds the part of the connector, and the securing cup (260) is positioned between the magnet holding means (300) and the sleeve (250). The securing cup can be made of any material. The material is preferably not ferromagnetic. Preferably, the securing cup (260) is composed of iron or iron alloy, more preferably iron alloy. The iron alloy can be steel, and more preferably stainless steel. It is preferred if the iron or iron alloy is not ferromagnetic. The steel is thus preferably an austenite, and more preferably stainless steel austenite. The steel can be a chromium-nickel steel, preferably AISI 316 (SAE 316). Still more preferably, the steel is AISI 316. Most preferably, the securing cup (260) is made of an AISI 316 annealed stainless steel bar.

Further, the device (200) can contain an adapter (290) for connecting a motorized power handle (600) to the device (200). Preferably, an ISO type motor adapter is used. In general, the adapter can be made of any material. However, it is preferred if the material is non-ferromagnetic and/or non-paramagnetic as well as low-paramagnetic. The material can be aluminium or aluminium alloy, more preferably aluminium alloy, and still preferably A6061 aluminium alloy, and most preferably A6061-T6 aluminium alloy. The number of the aluminium alloy follows the UNS-numbering (Unified Numbering System for Metals and Alloys)

Furthermore, device (200) according to the invention can contain a spring (270). The spring can be positioned between the magnet-holding mean (300) and the securing cap (260). The spring (270) can be composed of steel. Preferably, the spring (270) is composed of stainless steel. More preferably, the spring (270) is made of spring steel. Still more preferably, the spring (270) is made of steel according to EN 10151:2002 or EN10270-3:2001 (DIN 17224). The spring serves to couple the sleeve (250) with the motorized power handle (600). Thereby, the spring pushes the sleeve (250) against the shaft of the motorized power handle (600) in order to create a mechanical engagement between the sleeve (250) and the shaft of the motorized power handle (600).

The housing (201) of the device (200) which encases the components of the device (200) can be made of a polymer. Preferably, the polymer is resistant of aqueous acids, aqueous bases and/or alcohols. More preferably, the polymer is resistant to aqueous acids namely hydrochloric acid and phosphoric acids. The polymer can be a thermosetting polymer (thermoset) or thermosoftening plastic (thermoplastic). Preferably, the polymer is an organic polymer. The polymer can be selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, styrene-butadiene-styrene, epoxy resin, and phenol formaldehyde resins (phenolic resins). Preferably, the polymer is selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, and styrene-butadiene-styrene. More preferably, the polymer is selected from the group comprising or consisting of acrylonitrile butadiene styrene copolymer (ABS), acrylonitrile styrene (ANS), polyphthalamide, poly(ethene-co-tetrafluoroethene), polycarbonate, polyethylene, polyimide, polystyrene, and polyvinyl chloride. Still more preferably, the polymer is selected from the group comprising or consisting of acrylonitrile butadiene styrene copolymer (ABS), acrylonitrile styrene (ANS), polyphthalamide, and polycarbonate. The polymer is most preferably acrylonitrile butadiene styrene copolymer (ABS).

The coil (510), the central processing unit (520), the inner encoder (530), the transmitter (550), and the antenna (560) can be fixed on an electrical circuit housing (580). More preferably, the coil (510), the central processing unit (520), the inner encoder (530), the transmitter (550), the antenna (560), and the DC-DC converter (570) are fixed on an electrical circuit housing (580).

The printed circuit board (500) can be fixed on an electrical circuit housing (580). The printed circuit board (500) containing the coil (510), the central processing unit (520), the inner encoder (530), the transmitter (550), and the antenna (560) can be fixed on an electrical circuit housing (580). Optimally, the printed circuit board (500) containing the coil (510), the central processing unit (520), the inner encoder (530), the transmitter (550), the antenna (560), and the DC-DC converter are fixed on an electrical circuit housing (580).

The electrical circuit housing (580) can be composed of any material. Preferably the material is not ferromagnetic, paramagnetic or diamagnetic. The material is preferably a polymer. Preferably, the polymer is resistant of aqueous acids, aqueous bases and/or alcohols. More preferably, the polymer is resistant to aqueous acids namely hydrochloric acid and phosphoric acids. The polymer can be a thermosetting polymer (thermoset) or thermosoftening plastic (thermoplastic). Preferably, the polymer is an organic polymer. The polymer can be selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, styrene-butadiene-styrene, epoxy resin, and phenol formaldehyde resins (phenolic resins). Preferably, the polymer is selected from the group comprising or consisting of acrylonitrile butadiene styrene copolymer (ABS), acrylonitrile styrene (ANS), cellulose acetate, cellulose acetate butyrate, cellulose acetate propionate, cellulose acetate phthalate, cellulose nitrate, cyclic olefin copolymer, poly(ethene-co-tetrafluoroethene), poly(ethene-co-chlorortrifluoroethene), fluorinated ethylene propylene, polystyrene, high impact polystyrene, polybutylene adipate terephthalate, polybutylene succinate, polybutylene terephthalate, polycarbonate, polychlorotrifluoroethylene, polyethylene terephthalate, polylactide, polyethylene naphthalate, polyetherimide, polyetherketones (PEK) such as polyetheretherketone (PEEK), polyetherketoneketone (PEKK), polyetheretheretherketone (PEEEK), polyetheretherketoneketone (PEEKK), polyetherketone-etherketoneketone (PEKEKK), polyethersulfone, polyethylene, polysuccinimide, polybismaleimide, polyimide sulfone, polymethacrylimide, polymethacrylmethylimide, polymethylpentene, polyoxymethylene, poly(p-phenylene oxide), polyphenylene sulfide, polyphthalamide, polysulfone, polyurethane, polyvinyl chloride, polyvinylidene fluoride, and styrene-butadiene-styrene. More preferably, the polymer is selected from the group comprising or consisting of acrylonitrile butadiene styrene copolymer (ABS), acrylonitrile styrene (ANS), polyphthalamide, poly(ethene-co-tetrafluoroethene), polycarbonate, polyethylene, polyimide, polystyrene, and polyvinyl chloride. Still more preferably, the polymer is selected from the group comprising or consisting of acrylonitrile butadiene styrene copolymer (ABS), acrylonitrile styrene (ANS), polyphthalamide, and polycarbonate. The polymer is most preferably acrylonitrile butadiene styrene copolymer (ABS).

The drive shaft (220) can be linked to the other components of the rotator part (202) of the device (200) by a pin (280). The pin (280) can be composed of any material. The material is preferably not ferromagnetic. Preferably, the drive shaft (220) is composed of iron or iron alloy, more preferably iron alloy. The iron alloy can be steel, and more preferably stainless steel. It is preferred if the iron or iron alloy is not ferromagnetic. The steel is thus preferably an austenite, and more preferably stainless steel austenite. The steel can be chromium-nickel steel, preferably AISI 316 (SAE 316). Still more preferably, the steel is AISI 316. Most preferably, the pin (180) is made of an AISI 316 annealed stainless steel bar.

The drive shaft (220) can be linked by a pin (280) to the sleeve (250). Moreover, the magnet holding means (300) can be linked to the drive shaft (220) by a pin (285). Preferably, the pin interconnecting the magnet holding means (300) and the drive shaft (220) is a slotted spring pin. The slotted spring pin can be made of steel, and preferably stainless steel. The steel can have an austenitic structure. Preferably, the steel is not ferromagnetic. The steel can be a chromium-nickelsteel, preferably, the steel is 18-8 stainless steel (AISI/SAE 304).

Various nomenclature for metal and metal alloys are known, among others the Unified Numbering System for Metals and Alloys (UNS), the AISI/SAE (American Iron and Steel Institute/Society of Automotive Engineers), DIN-Standard (Deutsches Institut for Normung; a standard in Germany) or the European Standard (EN).

The alloy AISI 1008/SAE 1008 (material number: 1.0034; UNS: G10080) has the following composition:

| | |
|---|---|
| 0.3 - 0.5 wt% | Mn |
| ≤ 0.05 wt% | S |
| ≤ 0.04 wt% | P |
| ≤ 0.1 wt% | C |
| Balance to 100 wt% | Fe |

The alloy AISI/SAE 440C (Material number 1.4125; DIN 17740, UNS: S44004, EN material designation: X105CrMo17) has the following composition:

| | |
|---|---|
| 16.0 wt% - 18.0 wt% | Cr |
| ≤ 0.8 wt% | Mo |
| ≤ 1.0 wt% | Mn |
| ≤ 0.04 wt% | S |
| ≤0.04 wt% | P |
| ≤ 1.0 wt% | Si |
| 0.95 wt - 1.20 wt% | C |
| Balance to 100 wt% | Fe |

Preferably, the alloy AISI/SAE 440c has the following composition:

| | |
|---|---|
| 16.0 wt% - 18.0 wt% | Cr |
| 0.4 - 0.8 wt% | Mo |
| ≤ 1.0 wt% | Mn |
| ≤ 0.04 wt% | S |
| ≤0.04 wt% | P |
| ≤ 1.0 wt% | Si |
| 0.95 wt - 1.20 wt% | C |
| Balance to 100 wt% | Fe |

The alloy AISI 316 / SAE 316 (Material number: 1.4401; EN material designation: X5CrNiMo 17-12-2; UNS 31600) has the following composition:

| | |
|---|---|
| 16.5 - 18.5 wt% | Cr |
| 2.0 - 2.5 wt% | Mo |
| 10.0 - 13.0 wt% | Ni |
| ≤ 2.0 wt% | Mn |
| ≤ 0.015 wt% | S |
| ≤0.011 wt% | N |
| ≤0.045 wt% | P |
| ≤ 1.0 wt% | Si |
| ≤ 0.07 wt% | C |
| Balance to 100 wt% | Fe |

The alloy 18/8 (18-8; AISI/SAE 304; material no. 1.4301; UNS: S30400) has the following composition:

| | |
|---|---|
| 17.5 - 19.5 wt% | Cr |
| 8.0 - 10.5 wt% | Ni |
| ≤ 2.0 wt% | Mn |
| ≤ 0.015 wt% | S |
| ≤0.011 wt% | N |
| ≤0.045 wt% | P |
| ≤ 1.0 wt% | Si |
| ≤ 0.07 wt% | C |
| Balance to 100 wt% | Fe |

DIN17224 (EN 10151:2002 or EN10270-3:2001) refers to stainless steel strip for springs (technical delivery conditions) or steel wire for mechanical springs (part 3: stainless spring steel wire). The spring can be composed of an alloy such as X10CrNi18-8 (material no. 1.4310), X11CrMnNiN19-8-6 (material no. 1.4369), X12CrMnNiN17-7-5 (material no. 1.4372), X20Cr13 (material no.1.4021), X30Cr13 (material no. 1.4028), X39Cr13 (material no. 1.4031), X5CrNi18-10 (material no. 1.4301), X5CrNiMo17-12-2 (material no.1.4401), X6Cr17 (material no. 1.4016) X7CrNiAl17-7 (material no. 1.4568), X10CrNi18-8 (material no. 1.4310), X5CrNiMO17-12-2 (material no. 1.4401), or X7CrNiAl17-7 (material no. 1.4568).

For example, the steel X10CrNi18-8 (material no. 1.4310) has the following composition:

| | |
|---|---|
| 16.0 - 19.0 wt% | Cr |
| 6.0 - 9.5 wt% | Ni |
| ≤2.0 wt% | Mn |
| ≤0.8 wt% | Mo |
| ≤0.015 wt% | S |
| ≤0.011 wt% | N |
| ≤0.045 wt% | P |
| ≤ 2.0 wt% | Si |
| 0.05 - 0.12 wt% | C |
| Balance to 100 wt% | Fe |

The alloy A6061-T6 (UNS A96061) has the following composition:

| | |
|---|---|
| 0.4 - 0.8 wt% | Si |
| ≤ 0.8 wt% | Fe |
| 0.15 - 0.4 wt% | Cu |
| ≤ 0.25 wt% | Zn |
| ≤ 0.15 wt% | Mn |
| 0.8 - 1.2 wt% | Mg |
| ≤ 0.15 wt% | Ti |
| 0.04 - 0.35 wt% | Cr |
| Balance to 100 wt% | Al |

Preferably, the alloy A6061-T6 (UNS A96061) has the following composition:

| | |
|---|---|
| 0.4 - 0.8 wt% | Si |
| ≤ 0.8 wt% | Fe |
| 0.15 - 0.4 wt% | Cu |
| ≤ 0.25 wt% | Zn |
| 0.15 wt% | Mn |
| 0.8 - 1.2 wt% | Mg |
| ≤ 0.15 wt% | Ti |
| 0.04 - 0.35 wt% | Cr |
| Balance to 100 wt% | Al |

### Description of the Figures

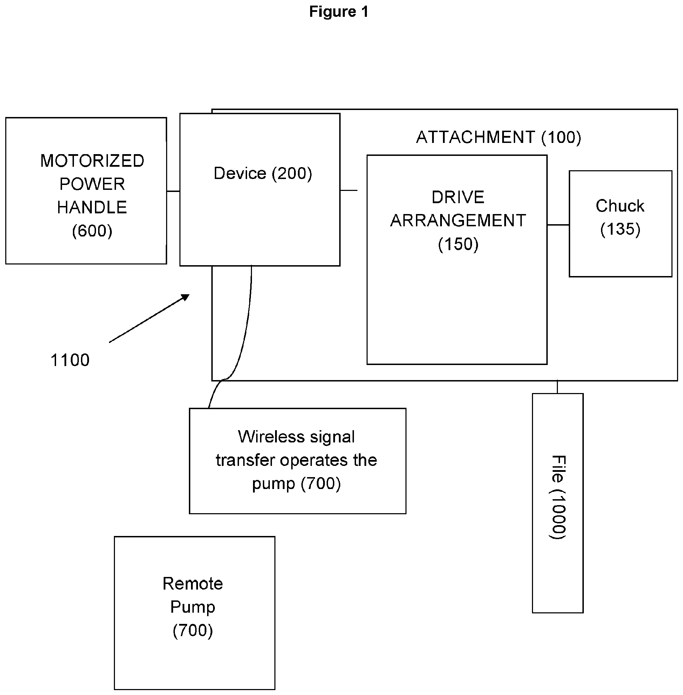

- **Figure 1**: shows a schematic representation of an embodiment of a dental device (1100) including a device (200) for driving an endodontic file (1000) and operating a remote pump (700), which is integrated in a contra-angle dental handpiece attachment (100) according to the invention. The attachment can comprise a file (1000), a tool holder in form of a chuck (135) and a drive arrangement (150).

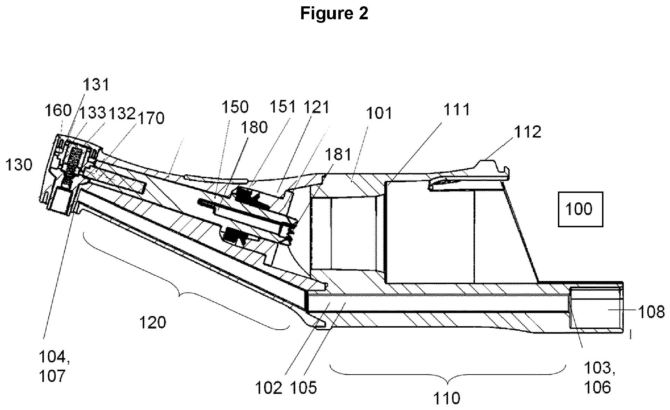

- **Figure 2**: shows a longitudinal section of the attachment (100) according to the invention.
- **Figure 3A**: shows the attachment (100) according to the invention equipped with an endodontic file (1000). The perspective shows an elastic snap element (112) at the handle portion (110).
- **Figure 3B**: shows an embodiment of the eccentric shaft (170) of the attachment (100) according to the invention. The perspective shows a part of the clutch mechanism, which engages in and drives the file shaft (160) rotationally and vibrationally.
- **Figure 4**: shows the device (200). The perspective shows the gear (210) in form of a bevel gear (215).
- **Figure 5**: shows the longitudinal section of the device (200).
- **Figure 6**: shows an explosion view of the rotator part (202).

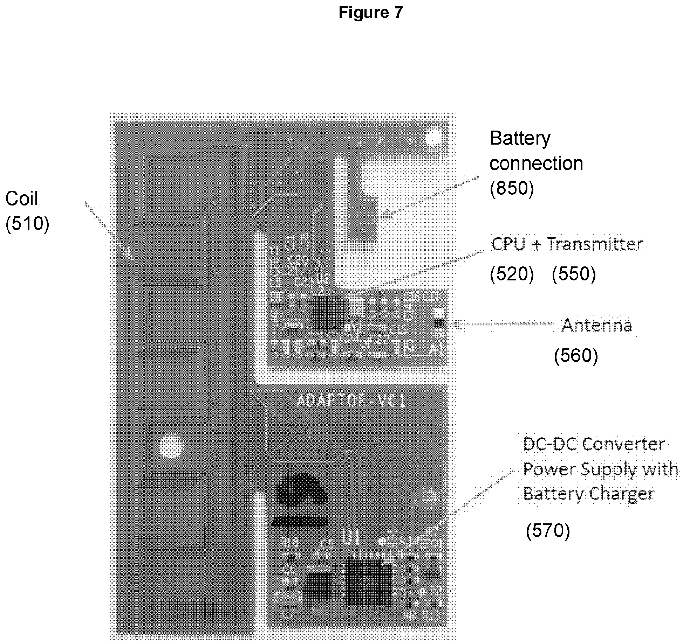

- **Figure 7**: shows an embodiment of the printed circuit board (500).
- **Figure 8**: shows a schematic view of an exemplary coil (510) in square wave pattern printed on the circuit board (500). B refers to the center line of the coil. A represents closest distance between the center line and the square wave pattern and P represents the length of each segment of the square wave pattern.

### Reference Signs

- 10: tooth root canal

- 100: contra-angle dental handpiece attachment

- 101: elongated housing
- 102: through-conduit for delivering an irrigation solution to a tooth root canal (500)
- 103: proximal end of through-conduit (102)
- 104: distal end of through-conduit (102)
- 105: a through-conduit () for sucking an irrigation solution from a tooth root canal (500)
- 106: proximal end of through-conduit (105)
- 107: distal end of through-conduit (105)
- 108: port for establishing fluid communication with a remote pump and a reservoir
- 110: handle portion
- 111: solid protrusion
- 112: elastic snap element
- 120: shank portion
- 121: part of the wall tapered towards the handle portion (110)
- 130: head portion
- 131: push-button for dismounting the endodontic file
- 132: spring
- 133: spring cup
- 135: chuck
- 150: drive arrangement
- 151: radial fastening projection
- 152: elastic O-ring
- 160: file shaft for driving the endodontic file
- 170: eccentric shaft
- 180: crown gear shaft
- 181: crown gear

- 200: device for driving an endodontic file and for operating a remote pump
- 201: housing
- 202: rotator part
- 210: gear
- 215: steel bevel gear
- 220: gear shaft
- 230: bearing
- 240: bearing spacer
- 250: sleeve
- 260: securing cup
- 270: spring
- 280,285: pin
- 290: adapter

- 300: magnet holding means
- 305: magnetic separator
- 310: magnet
- 410: first cylindrical holding means
- 450: second cylindrical holding means

- 500: printed circuit board
- 510: coil
- 520: central processing unit
- 530: inner encoder
- 550: transmitter
- 560: antenna
- 570: DC-DC converter
- 580: electrical circuit housing

- 600: motorized power handle

- 700: remote pump
- 750: reservoir

- 800: battery
- 810: rechargeable battery
- 850: battery connection
- 860: capacitor
- 870: capacitor charger
- 880: capacitor connection

- 900: battery charger
- 950: outer ring

- 1000: endodontic file
- 1100: dental device

## Claims

1. A contra-angle dental handpiece attachment (100) for a device (200) for driving an endodontic file (1000) and for operating a remote pump (700), the contra-angle dental handpiece attachment (100) comprising an elongated housing (101) made of radiolucent plastics, the elongated housing (101) comprises a generally hollow handle portion (110), a shank portion (120) being connected to the handle portion (110), and a head portion (130) being connected to the shank portion (120)
wherein the handle portion (110) is designed to enclose at least partially the device (200) and configured to form a detachable form-fit connection with the device (200);
wherein the handle portion (110) is made of radiolucent plastics in order to not interfere with electromagnetic components of the device (200), including a transmitter (550) and/or an antenna (560) and/or an rotatable magnetic holding means (300) of the device (200);
wherein a drive arrangement (150) made of plastics is mounted in the shank portion (120), the drive arrangement (150) comprising a file shaft (160) for driving the endodontic file (1000), an eccentric shaft (170) being coupled to the file shaft (160) and a crown gear shaft (180) being coupled to the eccentric shaft (170),
wherein a crown gear (181) of the crown gear shaft (180) protrudes in the handle portion (110) and is positioned to rotatably couple to a gear (210) for driving the endodontic file (1000) of the device (200);
wherein the head portion (130) comprises a chuck (135) for receiving an endodontic file (1000);
wherein the elongated housing (101) further comprises a through-conduit (102) for delivering an irrigation solution to a tooth root canal (10), the through-conduit (102) having a proximal end (103) extending beyond the handle portion (110) that is configured to establish a fluid communication with a reservoir (750) and a distal end (104) at the head portion (130) where the endodontic file (1000) is placed;
wherein the elongated housing (101) further comprises a through-conduit (105) for sucking an irrigation solution from a tooth root canal (10), the through-conduit (105) having a proximal end (106) extending beyond the handle portion (110) that is configured to establish a fluid communication with a remote pump (700) remotely operated by the device (200) and a distal end (107) at the head portion (130) configured for establishing a fluid communication with an area of the tooth root canal (10) from which the irrigation solution may be removed.

2. The contra-angle dental handpiece attachment (100) according to claim 1, wherein the handle portion (110) of the housing (101) has a thickness of at least 2 mm.

3. The contra-angle dental handpiece attachment (100) according to claim 1 or 2 wherein the shank portion (120) of the housing (101) has a thickness of at least 4 mm.

4. The contra-angle dental handpiece attachment (100) according to any one of the claims 1 to 3, wherein the crown gear (181) of the crown gear shaft (180) is configured to rotatably couple in a shaft angle between 160° and 180° to the gear (210) for driving the endodontic file (1000).

5. The contra-angle dental handpiece attachment (100) according to claim 1, wherein the contra-angle dental handpiece attachment (100) is a single-use contra-angle dental handpiece attachment (100).

6. The contra-angle dental handpiece attachment (100) according to any one of the claims 1 to 5, wherein the drive arrangement (150) is fixed in a sealed manner in the shank portion (120) of the elongated housing (101).

7. The contra-angle dental handpiece attachment (100) according to any one of the claims 1 to 6, wherein the drive arrangement (150) comprises a radial fastening projection (151) and an elastic V-ring (152) having an elastically enlarged diameter, wherein the elastic V-ring (152) is positioned adjacent to the radial fastening projection (151) and the drive arrangement (150) is fixed by said radial fastening projection (151) at a part of the inner wall (121) of the shank portion (120) that is tapered towards the handle portion (110).

8. The contra-angle dental handpiece attachment (100) according to any one of the claims 1 to 7, wherein the drive arrangement (150) is made of polyoxymethylene acetal copolymer and/or polyetheretherketone.

9. The contra-angle dental handpiece attachment (100) according to any one of the claims 1 to 8, wherein the handle portion (110) of the housing (101) comprises a solid protrusion (111) on the inside as a stop for positioning the device (200).

10. The contra-angle dental handpiece attachment (100) according to any one of the claims 1 to 9, wherein the through-conduit (102) for delivering an irrigation solution to a tooth root canal (10) and the through-conduit (105) for sucking an irrigation solution from a tooth root canal (10) are arranged parallel and adjacent to each other.

11. The contra-angle dental handpiece attachment (100) according to any one of the claims 1 to 10, wherein a part of the handle portion (110) of the elongated housing (101) is designed as an elastic snap element (112) for forming a detachable non-rotatable form-fit connection with the device (200) and wherein said snap element (112) is located opposite to the proximal end of the through-conduit (102) for delivering an irrigation solution to a tooth root canal (10) and the proximal end of the through-conduit (105) for sucking an irrigation solution from a tooth root canal (10).

12. The contra-angle dental handpiece attachment (100) according to any one of the claims 1 to 11, wherein the head portion (130) further comprises a push-button (131) for dismounting the endodontic file (1000).

13. The contra-angle dental handpiece attachment (100) according to any one of the claims 1 to 12, wherein the housing (101) is made of acrylonitrile butadiene styrene or polycarbonate.

14. The contra-angle dental handpiece attachment (100) according to any one of the claims 1 to 13, wherein the drive arrangement (150) comprises a clutch mechanism, which disables a reciprocating movement of the endodontic file (1000) when the movement of the endodontic file (1000) is restricted.

15. A dental device (1100) for shaping, flushing and suction a tooth root canal (10), the dental device (110) comprising the contra-angle dental handpiece attachment (100) according to any one of the claims 1 to 14 and a device (200) attached to said contra-angle dental handpiece attachment (100).

## Patentansprüche

1. Ein dentaler Winkelhandstückaufsatz (100) für eine Vorrichtung (200) zum Antreiben einer endodontischen Feile (1000) und zum Betreiben einer ferngesteuerten Pumpe (700), wobei der Winkelhandstückaufsatz (100) ein längliches Gehäuse (101) umfasst, das aus strahlendurchlässigem Kunststoff hergestellt ist, wobei das längliche Gehäuse (101) einen allgemein hohlen Griffabschnitt (110), einen Schaftabschnitt (120), der mit dem Griffabschnitt (110) verbunden ist, und einen Kopfabschnitt (130) umfasst, der mit dem Schaftabschnitt (120) verbunden ist
wobei der Griffabschnitt (110) ausgestaltet ist, um die Vorrichtung (200) zumindest teilweise zu umschließen, und konfiguriert ist, um eine abnehmbare formschlüssige Verbindung mit der Vorrichtung (200) zu bilden;
wobei der Griffabschnitt (110) aus strahlendurchlässigem Kunststoff hergestellt ist, um elektromagnetische Komponenten der Vorrichtung (200), einschließlich eines Senders (550) und/oder einer Antenne (560) und/oder einer drehbaren magnetischen Halteeinrichtung (300) der Vorrichtung (200), nicht zu beeinträchtigen;
wobei in dem Schaftabschnitt (120) eine Antriebsanordnung (150) aus Kunststoff angebracht ist, die eine Feilenwelle (160) zum Antrieb der endodontischen Feile (1000) umfasst, wobei eine Exzenterwelle (170) mit der Feilenwelle (160) gekoppelt ist und eine Zahnkranzwelle (180) mit der Exzenterwelle (170) gekoppelt ist,
wobei ein Zahnkranz (181) der Zahnkranzwelle (180) in den Griffabschnitt (110) hineinragt und angeordnet ist, um drehbar mit einem Zahnrad (210) zum Antrieb der endodontischen Feile (1000) der Vorrichtung (200) zu koppeln;
wobei der Kopfteil (130) ein Spannmittel (135) zur Aufnahme einer endodontischen Feile (1000) umfasst;
wobei das längliche Gehäuse (101) weiterhin eine Durchgangsleitung (102) zum Zuführen einer Spüllösung zu einem Zahnwurzelkanal (10) umfasst, wobei die Durchgangsleitung (102) ein proximales Ende (103) aufweist, das sich über den Griffabschnitt (110) hinaus erstreckt und konfiguriert ist, um eine Fluidverbindung mit einem Reservoir (750) herzustellen, und ein distales Ende (104) am Kopfabschnitt (130) aufweist, wo die endodontische Feile (1000) platziert wird;
wobei das längliche Gehäuse (101) weiterhin eine Durchgangsleitung (105) zum Ansaugen einer Spüllösung aus einem Zahnwurzelkanal (10) umfasst, wobei die Durchgangsleitung (105) ein proximales Ende (106) aufweist, das sich über den Griffabschnitt (110) hinaus erstreckt und konfiguriert ist, um eine Fluidverbindung mit einer von der Vorrichtung (200) ferngesteuerten Pumpe (700) herzustellen, und ein distales Ende (107) am Kopfabschnitt (130) aufweist, das konfiguriert ist, um eine Fluidverbindung mit einem Bereich des Zahnwurzelkanals (10) herzustellen, aus dem die Spüllösung entfernt werden kann.

2. Der dentale Winkelhandstückaufsatz (100) gemäß Anspruch 1, wobei der Griffabschnitt (110) des Gehäuses (101) eine Dicke von mindestens 2 mm aufweist.

3. Der dentale Winkelhandstückaufsatz (100) gemäß Anspruch 1 oder 2, wobei der Schaftabschnitt (120) des Gehäuses (101) eine Dicke von mindestens 4 mm aufweist.

4. Der dentale Winkelhandstückaufsatz (100) gemäß einem der Ansprüche 1 bis 3, wobei dar Zahnkranz (181) der Zahnkranzwelle (180) ausgebildet ist, um in einem Wellenwinkel zwischen 160° und 180° drehbar mit dem Zahnrad (210) zum Antreiben der endodontischen Feile (1000) zu koppeln.

5. Der dentale Winkelhandstückaufsatz (100) gemäß Anspruch 1, wobei der dentale Winkelhandstückaufsatz(100) ein dentaler Einweg-Winkelhandstückaufsatz (100) ist.

6. Der dentale Winkelhandstückaufsatz (100) gemäß einem der Ansprüche 1 bis 5, wobei die Antriebsanordnung (150) im Schaftabschnitt (120) des länglichen Gehäuses (101) in abgedichteter Form befestigt ist.

7. Der dentale Winkelhandstückaufsatz (100) nach einem der Ansprüche 1 bis 6, wobei die Antriebsanordnung (150) einen radialen Befestigungsvorsprung (151) und einen elastischen V-Ring (152) mit elastisch vergrößertem Durchmesser umfasst, wobei der elastische V-Ring (152) neben dem radialen Befestigungsvorsprung (151) angeordnet ist und die Antriebsanordnung (150) durch den radialen Befestigungsvorsprung (151) an einem Teil der Innenwand (121) des Schaftabschnitts (120), der sich zum Griffabschnitt (110) hin verjüngt, fixiert ist.

8. Der dentale Winkelhandstückaufsatz (100) gemäß einem der Ansprüche 1 bis 7, wobei die Antriebsanordnung (150) aus Polyoxymethylen-Acetal-Copolymer und/oder Polyetheretherketon hergestellt ist.

9. Der dentale Winkelhandstückaufsatz (100) gemäß einem der Ansprüche 1 bis 8, wobei der Griffabschnitt (110) des Gehäuses (101) einen festen Vorsprung (111) an der Innenseite als Anschlag zur Positionierung der Vorrichtung (200) umfasst.

10. Der dentale Winkelhandstückaufsatz (100) gemäß einem der Ansprüche 1 bis 9, wobei die Durchgangsleitung (102) zum Zuführen einer Spüllösung in einen Zahnwurzelkanal (10) und die Durchgangsleitung (105) zum Ansaugen einer Spüllösung aus einem Zahnwurzelkanal (10) parallel und benachbart zueinander angeordnet sind.

11. Der dentale Winkelhandstückaufsatz (100) gemäß einem der Ansprüche 1 bis 10, wobei ein Teil des Griffabschnitts (110) des länglichen Gehäuses (101) als elastisches Schnappelement (112) ausgebildet ist, um eine lösbare, nicht drehbare formschlüssige Verbindung mit der Vorrichtung (200) zu bilden, und wobei das Schnappelement (112) gegenüber dem proximalen Ende der Durchgangsleitung (102) zum Zuführen einer Spüllösung zu einem Zahnwurzelkanal (10) und dem proximalen Ende der Durchgangsleitung (105) zum Ansaugen einer Spüllösung aus einem Zahnwurzelkanal (10) angeordnet ist.

12. Der dentale Winkelhandstückaufsatz (100) gemäß einem der Ansprüche 1 bis 11, wobei der Kopfabschnitt (130) weiter einen Druckknopf (131) zum Abnehmen der endodontischen Feile (1000) umfasst.

13. Der dentale Winkelhandstückaufsatz (100) gemäß einem der Ansprüche 1 bis 12, wobei das Gehäuse (101) aus Acrylnitril-Butadien-Styrol oder Polycarbonat besteht.

14. Der dentale Winkelhandstückaufsatz (100) gemäß einem der Ansprüche 1 bis 13, wobei die Antriebsanordnung (150) einen Kupplungsmechanismus umfasst, der eine Hin- und Herbewegung der endodontischen Feile (1000) unterbindet, wenn die Bewegung der endodontischen Feile (1000) eingeschränkt ist.

15. Eine dentale Vorrichtung (1100) zum Formen, Spülen und Absaugen eines Zahnwurzelkanals (10), wobei die dentale Vorrichtung (110) den dentalen Winkelhandstückaufsatz (100) gemäß einem der Ansprüche 1 bis 14 und eine an diesem Winkelhandstückaufsatz (100) angebrachte Vorrichtung (200) umfasst.

## Revendications

1. Un accessoire d'équipement dentaire manuel à contre-angle (100) pour un dispositif (200) destiné à entraîner une lime endodontique (1000) et à actionner une pompe à distance (700), ledit accessoire d'équipement dentaire manuel à contre-angle (100) comprenant un boîtier allongé (101) en plastique radiotransparent, le boîtier allongé (101) comprenant une section de poignée généralement creuse (110), une section de tige (120) reliée à ladite section de poignée (110), et une section de tête (130) reliée à la section de tige (120)
où la section de poignée (110) est conçue pour contenir au moins partiellement le dispositif (200) et configurée pour former une connexion amovible encastrable avec le dispositif (200) ;
où la section de poignée (110) est en matière plastique radiotransparente afin de ne pas interférer avec les composants électromagnétiques du dispositif (200), notamment un émetteur (550), une antenne (560) et/ou un dispositif de maintien magnétique rotatif (300) du dispositif (200) ;
où un dispositif d'entraînement (150) en matière plastique est monté dans la section de tige (120), ce dispositif d'entraînement (150) comprenant un arbre de lime (160) pour entraîner la lime endodontique (1 000), un arbre excentrique (170) couplé à l'arbre de lime (160) et un arbre à couronne dentée (180) couplé à l'arbre excentrique (170),
où une couronne dentée (181) de l'arbre à couronne dentée (180) fait saillie dans la section de poignée (110) et est positionnée de manière à s'engrener en tournant à un pignon (210) pour entraîner la lime endodontique (1000) du dispositif (200) ;
où la section de tête (130) comprend un mandrin (135) destiné à recevoir une lime endodontique (1000) ;
où le boîtier allongé (101) comprend également un conduit traversant (102) destiné à acheminer une solution de rinçage à un canal radiculaire (10), ledit conduit traversant (102) ayant une extrémité proximale (103) s'étendant au-delà de la section de poignée (110) configurée pour permettre un échange de fluide avec un réservoir (750) et une extrémité distale (104) au niveau de la section de tête (130) où la lime endodontique (1000) est placée ;
où le boîtier allongé (101) comprend également un conduit traversant (105) conçu pour aspirer une solution de rinçage depuis un canal radiculaire (10), ledit conduit traversant (105) ayant une extrémité proximale (106) s'étendant au-delà de la section de poignée (110) configurée pour permettre un échange de fluide avec une pompe (700) actionnée à distance par le dispositif (200) et une extrémité distale (107) au niveau de la section de tête (130) configurée pour permettre un échange de fluide avec une zone du canal radiculaire (10) à partir de laquelle la solution de rinçage peut être retirée.

2. Un accessoire pour équipement dentaire manuel à contre-angle (100) conformément à la revendication 1, où la section de poignée (110) du boîtier (101) a une épaisseur d'au moins 2 mm.

3. Un accessoire pour équipement dentaire manuel à contre-angle (100) conformément à la revendication 1 ou 2, où la section de tige (120) du boîtier (101) a une épaisseur d'au moins 4 mm.

4. Un accessoire pour équipement dentaire manuel à contre-angle (100) conformément à l'une des revendications 1 à 3, où la couronne dentée (181) de l'arbre à couronne dentée (180) est configurée pour s'engrener en tournant dans un angle d'arbre compris entre 160° et 180° avec le pignon (210) pour entraîner la lime endodontique (1000).

5. Un accessoire pour équipement dentaire manuel à contre-angle (100) conformément à la revendication 1, où ledit accessoire pour équipement dentaire manuel à contre-angle (100) est à usage unique.

6. Un accessoire pour équipement dentaire manuel à contre-angle (100) conformément à l'une des revendications 1 à 5, où le dispositif d'entraînement (150) est fixé de manière étanche dans la section de tige (120) du boîtier allongé (101).

7. Un accessoire pour équipement dentaire manuel à contre-angle (100) conformément à l'une des revendications 1 à 6, où le dispositif d'entraînement (150) comprend une saillie de fixation radiale (151) et un anneau élastique en V (152) ayant un diamètre élargi élastique, dans lequel l'anneau élastique en V (152) est positionné de façon adjacente à la saillie de fixation radiale (151) et le dispositif d'entraînement (150) est fixé par ladite saillie de fixation radiale (151) à une partie de la paroi intérieure (121) de la section de tige (120) effilée vers la section de poignée (110).

8. Un accessoire pour équipement dentaire manuel à contre-angle (100) conformément à l'une des revendications 1 à 7, où le dispositif d'entraînement (150) est en copolymère de polyoxyméthylène acétal et/ou en polyétheréthercétone.

9. Un accessoire pour équipement dentaire manuel à contre-angle (100) conformément à l'une des revendications 1 à 8, où la section de poignée (110) du boîtier (101) comprend une saillie solide (111) à l'intérieur, servant de butée pour positionner le dispositif (200).

10. Un accessoire pour équipement dentaire manuel à contre-angle (100) conformément à l'une des revendications 1 à 9, où le conduit traversant (102) conçu pour acheminer une solution de rinçage à un canal radiculaire dentaire (10) et le conduit traversant (105) conçu pour aspirer une solution de rinçage dans un canal radiculaire dentaire (10) sont disposés en parallèle et adjacents l'un à l'autre.

11. Un accessoire pour équipement dentaire manuel à contre-angle (100) conformément à l'une des revendications 1 à 10, où une partie de la section de poignée (110) du boîtier allongé (101) est conçue comme un élément élastique enfichable (112) pour former une connexion amovible non rotative encastrable avec le dispositif (200) et où ledit élément enfichable (112) est situé à l'opposé de l'extrémité proximale du conduit traversant (102) destiné à acheminer une solution de rinçage vers un canal radiculaire (10) et l'extrémité proximale du conduit traversant (105) destiné à aspirer une solution de rinçage dans un canal radiculaire (10).

12. Un accessoire pour équipement dentaire manuel à contre-angle (100) conformément à l'une des revendications 1 à 11, où la section de tête (130) comprend également un bouton-poussoir (131) pour démonter la lime endodontique (1000).

13. Un accessoire pour équipement dentaire manuel à contre-angle (100) conformément à l'une des revendications 1 à 12, où le boîtier (101) est en acrylonitrile butadiène styrène ou en polycarbonate.

14. Un accessoire pour équipement dentaire manuel à contre-angle (100) conformément à l'une des revendications 1 à 13, où le dispositif d'entraînement (150) comprend un mécanisme d'embrayage qui empêche tout mouvement alternatif de la lime endodontique (1 000) lorsque le mouvement de la lime endodontique (1000) est limité.

15. Un dispositif dentaire (1100) conçu pour façonner, rincer et aspirer un canal radiculaire (10), ledit dispositif dentaire (110) comprenant l'accessoire pour équipement dentaire manuel à contre-angle (100) conforme à l'une des revendications 1 à 14 et un dispositif (200) fixé audit accessoire pour équipement dentaire manuel à contre-angle (100).
